# EUROPEAN PATENT APPLICATION

(11) **EP 4 596 137 A1**
(43) Date of publication of application: **06.08.2025**
(21) Application number: 24154650.6
(22) Date of filing: 30.01.2024
(51) Int. Cl.: B21J 15/02, B21J 15/08, B21J 15/32, B23K 9/20, B23P 19/00, B25B 23/04, B25B 23/06

(54) **JOINING METHOD FOR JOINING WORKPIECES AND JOINING APPARATUS**

(71) Applicant: Newfrey LLC, New Britain, CT 06053 (US)
(72) Inventor: WOLOWIEC, Sabrina, 35394 Gießen (DE); WALLBOTT, Tim, 35394 Gießen (DE)
(74) Representative: SBD IPAdmin

(57) **Abstract**

Joining method for joining a workpiece arrangement and joining apparatus (10) for joining workpieces comprising a joining head (12) having:
- a retaining device (14) for a joining element and by means of which the joining element can be guided along or arranged on a joining axis (X),
- a punch (16) with which a setting movement of the joining element (24) can be executed, the punch (16) being movable along the joining axis by a drive unit (36), characterized in that the retaining device (14) is moved along the joining axis by the punch (16) and/or the clamping device (18).

## Description

The present disclosure relates to a joining method and a joining apparatus for setting a joining element in a workpiece arrangement (for instance for joining two workpieces or more with the joining element). More particularly, the present disclosure is directed to the joining of a workpiece arrangement with a joining element and without preformed (for example pre-drilled or pre-punched) hole or holes in the component or workpieces prior to the joining.

Joining methods and joining apparatus of the above-mentioned kind are widely known, especially in the field of punch riveting or direct screwing ... and are used for example in automotive engineering.

It is known to use during a mechanical joining process a joining apparatus with a punch with which a setting movement can be executed and a retaining device for retaining and/or guiding a joining element along a joining axis prior to or during its setting. Such joining apparatus is for instance described in the patent application EP 23196228.3 of the applicant.

In a known manner, such joining method uses a joining apparatus comprising a first actuator adapted to drive for instance the punch for setting the joining element or fastener and a second actuator adapted to drive the retaining device (also called fastener holder or holder). The first and second actuators may be for instance pneumatic and/or servo-electric and/or hydraulic drive system. EP0788418A1 for instance discloses a joining apparatus, notably a stud welding device comprising a stud holder actuated by a magnetic drive system.

Such systems with a second dedicated drive unit may be cumbersome, may also require in some cases the supply of pressurized air for pneumatic drive system or may require a complex and time-consuming calibration or actuation. Such systems may also be complex to manufacture.

It is therefore an object of the present invention to provide a joining method and a joining apparatus which is easy to implement, which limits the supply of additional resources (such as pressurized air), and which can be used with a wide range of joining elements.

Accordingly, the present invention provides a joining method for joining a workpiece arrangement comprising the following steps of:
- providing a workpiece arrangement;
- providing a joining apparatus comprising a joining head having:
   - a retaining device for a joining element and by means of which the joining element can be guided along or arranged on a joining axis,
   - a punch with which a setting movement of the joining element can be executed, the punch being movable along the joining axis by a drive unit, and
the joining apparatus being provided in a pre-setting position, with the retaining device being arranged at a non-zero distance above the workpiece arrangement, the retaining device holding a joining element, and the punch being at a non-zero distance from the joining element,
- moving the punch up to the joining element,
- setting the joining element in the workpiece arrangement,
wherein the punch drives in translation the retaining device.

Such joining method allows to avoid the presence of a further drive unit for the retaining device. The punch drives in translation the retaining device, to perform the setting steps. The retaining device is thus passively driven and does not need a dedicated drive unit. The motion and/or position of the retaining device is controlled and defined by the motion of the punch. No further drive unit for the retaining device is necessary. Besides, joining elements having different lengths may also be used without the need of a new calibration. The retaining device is passively driven for instance from a rest position or pre-setting position to a setting position, in which the joining element is inserted in the workpiece arrangement. The retaining device may also be passively driven back from the setting position to a pre-setting or rest position.

In an embodiment, the punch drives in translation the retaining device in a first and in a second direction, opposite the first direction. More particularly the retaining device can be moved by the punch in the direction of the workpiece (which is for example the first direction), and in the opposite direction (the second direction) along a longitudinal axis parallel to the joining axis.

In an alternative embodiment, the joining apparatus comprises a clamping device, the punch drives in translation the retaining device in a first direction, and a clamping device drives in translation the retaining device in a second direction, opposite the first direction. For instance, the punch will drive the retaining device in the direction of the workpiece arrangement (in the first direction) for the setting of the joining element. More particularly, the punch drives the retaining device from a rest position or a pre-setting position to its setting position. The clamping device, after the setting of the joining element will move the retaining device away from the workpiece arrangement when said clamping device return to its initial position. The clamping device will thus move the retaining device from a setting position to a pre-setting or rest position. In a known manner such clamping devices are used to compress one or more workpieces in a joining direction to avoid any gap between the workpieces, to avoid or influence a possible displacement of adhesive between the workpieces, to reduce the workpiece deformation during the joining process.

In an embodiment, the retaining device is a duct having an inlet and an outlet orifice and comprises:
- a second portion,
- a first portion, and
the retaining device applies a holding force on the punch when the punch is inserted into the first portion. More particularly, the first portion of the retaining device is a resilient portion adapted to be elastically deformed when an external force is applied. The punch, when being inserted into the first portion of the retaining device, deforms the first portion. A gripping action of the first portion to the punch is performed. Thus, the retaining device is coupled (and more particularly) passively coupled to the punch and the motion of the punch, controlled by the drive unit is transferred or passed or conveyed to the retaining device. More particularly, the gripping action of the first portion to the punch and the motion of the punch is transferred to the retaining device after the setting of the joining element when the punch moves back to its rest position. Before the setting of the joining element, the punch, through its contact with the joining element translates the retaining device via the joining element (in other words, the punch applies an effort on the joining element held by the retaining device and thus the punch pushes the joining element and the retaining device toward the workpiece arrangement for setting the joining element).

The retaining device applies a holding force to the punch. The force applied is an elastic force. Thus, the coupling of the punch and the retaining device may be automatically realised during the joining method when the punch is inserted in the first portion of the retaining device.

In an embodiment, the joining element is a fastening pin. The fastening pin joins workpieces of the workpiece arrangement.

In an embodiment, the joining apparatus comprises a thermal unit adapted to thermally pre-treat the workpiece arrangement locally, and wherein the thermal treatment is realized before moving the punch up to the joining element. For instance, the thermal unit is a plasma torch. The retaining device may be driven up to the workpiece arrangement only after the completion of the thermal treatment. The thermal unit may for instance be arranged on a clamping device or on a housing of the joining head. The thermal device may also be a device independent from the joining head. The thermal device is for instance used for pre-treating the workpiece arrangement before the insertion of the joining element.

In an embodiment, the punch drives in translation the retaining device after having contacted the joining element. This ensures the reliability of the process, and more particularly that the punch is in contact with the joining element before being coupled to the retaining device. Thus, it is ensured that the joining element is correctly positioned.

In an embodiment, the punch drives first in translation the joining element and then drives in translation the joining element and the retaining device. This ensures the reliability of the process, and more particularly that the punch is in contact with the joining element before being coupled to the retaining device.

In an embodiment, the retaining device is driven in translation by the punch until said retaining device reaches a mechanical stop. The mechanical stop ensures that the retaining device remains at a pre-determined distance from the workpiece arrangement during the joining step. The pre-determined distance depends on the length of the joining element.

In an embodiment, the mechanical stop is arranged at a freely adjustable predetermined position. Thus, the joining apparatus can be used with joining element having different lengths.

In an embodiment, once the retaining device reaches the mechanical abutment, the punch further drives in translation the joining element. The punch can then push the joining element in the workpiece arrangement.

The present invention is also directed to a joining apparatus for joining workpieces, in particular according to the joining method as described above. The joining apparatus comprises a joining head having:
- a retaining device for a joining element and by means of which the joining element can be guided along or arranged on a joining axis,
- a punch with which a setting movement of the joining element can be executed, the punch being movable along the joining axis by a drive unit,
   and
wherein the retaining device is moved along the joining axis by the punch.

Such joining apparatus is not provided with a drive unit for the retaining device. Just the drive unit for the punch (and/or the clamping device) is enough to passively drive the retaining device. Thus, the joining apparatus is compact and light in weight.

In an embodiment, the retaining device is a duct having an inlet and an outlet orifice and comprises:
- a second portion, and
- a first portion,

wherein the second portion extends between the inlet and the first portion, and the first portion extends between the first portion and the outlet,
wherein the first portion is at least in part a resilient portion adapted to apply a radial holding force. The first portion may be elastically deformed by the punch.

In an embodiment, the first portion comprises a holding inner dimension, the second portion comprises a guiding inner dimension, the holding inner dimension being smaller than the guiding inner dimension, and wherein the outer dimension of the punch is smaller than the guiding inner dimension and greater than the holding inner dimension. For instance, the first portion defines a holding inner diameter, the punch defines a punch outer diameter and the punch outer diameter is greater than the holding inner diameter such that the punch, when being inserted in the first portion elastically deforms the first portion.

In an embodiment, the retaining device comprises a retaining inner dimension which is smaller than the outer dimension of the punch. Thus, the punch can easily be coupled by elastic holding forces to the retaining device when said punch is inserted into the retaining device.

In an embodiment, the joining head comprises a clamping device with which one or more workpieces can be compressed in a joining direction. In an additional embodiment, the clamping device comprises a mechanical stop adapted to contact the retaining device and such that the clamping device is adapted to drive in translation the retaining device in a second direction after the setting of a joining element in a workpiece arrangement.

In an embodiment, the joining apparatus further comprises a thermal unit, preferably a plasma torch. The thermal unit is for instance arranged on the clamping device or on a housing of the joining head.

The invention and its advantages will be better understood from the reading of the following description, given by way of example only and with reference to the accompanying drawings, of which:
Fig. 1 shows a joining apparatus in cross-section according to the invention with a retaining device and a punch, wherein the joining apparatus is arranged above a joining area of a workpiece arrangement, the joining apparatus being at distance from the workpiece arrangement;
Fig. 2 shows a detail of the joining apparatus of Fig. 1 in cross-section with a joining element arranged in the retaining device, a clamping device contacting the workpiece arrangement and for example a thermal device performing a pre-treatment on the joining area of the workpiece arrangement;
Fig. 3 shows the detail of Fig. 2 with the thermal pre-treatment having stopped;
Fig. 4 shows the joining apparatus of Fig. 1 ready to perform joining steps following the pre-treatment depicted in Fig. 2;
Fig.5 shows the joining apparatus of Fig. 4 in cross-section with the punch moved forward the joining element and contacting the joining element;
Fig. 6 shows the joining apparatus of Fig. 5 in cross-section with the punch having driven the joining element in the retaining device and pushing the joining element toward the workpiece arrangement;
Fig. 7 shows the joining element contacting the workpiece arrangement after the punch has driven the joining element and the retaining device down toward the workpiece arrangement, a mechanical stop stopping the retaining device in its closest pre-determined position to the workpiece;
Fig. 8 shows the joining apparatus of Fig. 7 in cross-section with the joining element set into the workpiece arrangement by the punch, the retaining device applying a holding force on said punch;
Fig. 9 shows the joining apparatus of Fig. 8 in cross-section with the punch retracting to a pre setting position;
Fig. 10 shows the retraction of the punch in the pre-setting position and said punch driving the retaining device back in a pre-setting position;
Fig. 11 shows the retaining device in its rest position (waiting for a new joining element to be fed for beginning a new setting process with a new joining element) and the punch back in its pre setting position and disengaged from the retaining device;
Fig. 12 shows a detail of a joining apparatus in cross-section according to the invention, in which the punch is first driven back to its pre-setting position after the setting of a joining element, without driving back the retaining device;
Fig. 13 shows the joining apparatus of Fig. 12 in perspective, in which the clamping device drives the retaining device back to its pre-setting position.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

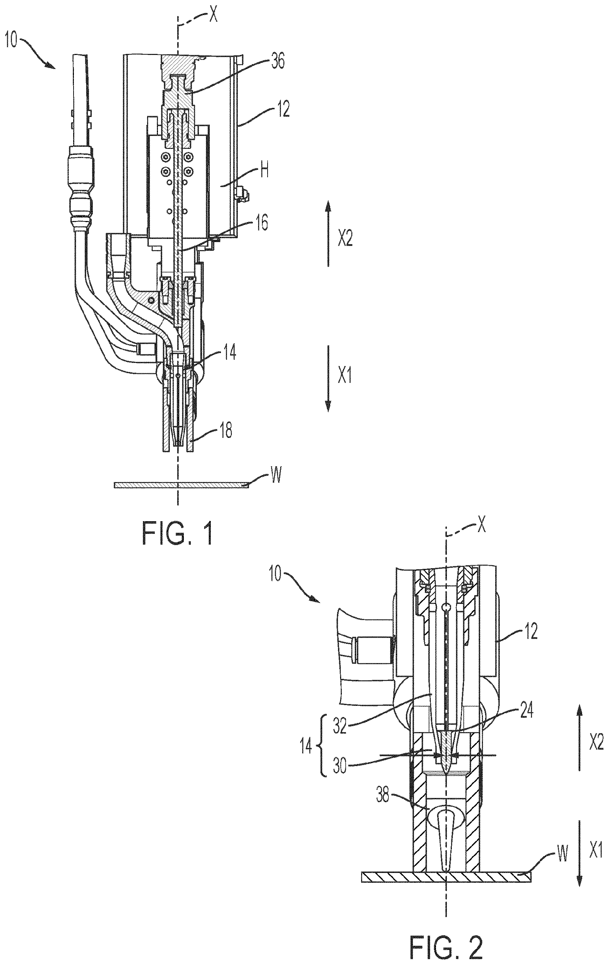

Fig. 1 shows in cross-section a joining device 10. The joining device is adapted to carry out a method for joining a workpiece arrangement W comprising for instance two or more workpieces, arranged one above the other, together with a joining element.

The joining apparatus 10 comprises a joining head 12, which can be moved freely in the space by means of an industrial robot (not represented). Eventually, as an alternative, the joining apparatus 10 can be fixed to a structure and the workpieces to be joined moved toward the joining apparatus when needed. Said joining head 12 being for instance mounted on one arm of the robot. The joining apparatus 10 or joining head 12 comprises a housing H, a retaining device 14, a punch 16 and clamping device 18. The joining head 12 defines a joining axis X.

The clamping device 18 is adapted to compress or press the workpiece arrangement W in the joining direction X1. The clamping device 18 comprises a dedicated clamping drive unit or is controlled by the same drive unit than the one driving the punch (as disclosed below). For instance, a drive unit that operates in at least two steps with which the punch 16 and the clamping device 18 can be moved by one motor and several gearboxes may be provided. Alternatively, the clamping device 18 is driven by its own drive unit as notably disclosed in EP 23196228.3. The clamping device 18 may comprise a clamp 20. Different shapes of clamps are possible. The clamp 20 defines a recess and a joining element 24 is adapted to be moved within the recess for its setting. More particularly, the punch 16 and at least a portion of the retaining device 14 can be guided inside the recess.

The retaining device 14 is adapted to retain and guide a joining element 24. The joining element 24 may, for example, be a pin, a screw, a rivet, ... More particularly the joining element 24 may be similar or substantially similar to the joining element described in EP22165638.2 from the applicant. For instance the joining element 24 comprises a head and a shaft extending from the head. The shaft comprises a free end adapted to pierce the workpiece arrangement W. The joining element defines a joining element length along a longitudinal axis. The length of the joining element corresponds to the longitudinal distance between the free end of the shaft and the head. The retaining device 14 guides or arranges the joining element 24 along the joining axis X for its setting by the punch 16 in the workpiece arrangement W.

The retaining device 14 is a joining element holder and is substantially tubular in design. The retaining device 14 is for instance a duct, more particularly a through-duct, having an inlet orifice 26 and an outlet orifice 28. The retaining device 14 comprises for instance a first portion 30 and a second portion 32. The second portion 32 has for instance a holding function. The first portion 30 has a holding and guiding function. The second portion 32 extends between the inlet orifice 26 and the first portion 30. The first portion 30 extends between the second portion 32 and the outlet orifice 28. The first portion 30 is a resilient portion. For instance, the first portion 30 comprises resilient holding fingers 34 extending in a longitudinal direction of the duct. The holding fingers 34 are distributed over a circumference of the duct. Slots extending in the longitudinal direction of the duct are formed between the holding fingers 34. The width of the slots can differ. The holding fingers 34 extend for example from the second portion 32. In another embodiment, the holding fingers may extend partly in the second portion. The free ends of the holding fingers define the outlet orifice 28. The holding fingers 34 may all be formed in the manner of a cantilever which is fixed in a region of the second portion 32. The first portion 30 comprises a holding inner dimension D1. More particularly, the holding fingers 34 define, in the vicinity of or at the outlet orifice an inner diameter. The second portion 32 defines a guiding inner dimension D2. More particularly, the second portion 32 defines an inner guiding diameter. The inner guiding diameter is greater than the inner holding diameter.

The punch 16 is adapted to drive or actuate the joining element 24 toward the workpiece arrangement W in order to carry out the joining. The retaining device 14 and the punch 16 are for instance arranged coaxially to the joining axis X. The punch 16 is adapted to penetrate the retaining device 14 in order to drive the joining element 24 toward and into the workpiece arrangement W. The punch 16 allows a setting movement of the joining element 24. Notably, the punch 16 allows a linear setting movement. The punch 16 is movable along the joining axis X by a drive unit 36. The drive unit 36 is an operating module comprising a motor, notably a servo motor or a servo drive adapted to move to a specific position, speed or torque based on an input signal from a controller. The drive unit 36 controls the punch 16 along the joining axis X. In other embodiments, the drive unit 36 could also be a hydraulic and/or pneumatic and/or electric drive unit. A linear or a rotational drive unit may also be considered. The punch 16 comprises a punch outer dimension D3. More particularly the punch defines a punch outer diameter. The punch outer dimension D3 is greater than the holding inner dimension D2.

The joining apparatus 10 may also comprise a thermal unit 38. The thermal unit 38 is for instance a plasma torch. The thermal unit 38 may be arranged on the housing or on the clamping device. The plasma torch or thermal device is adapted to thermally assist the joining process. Patent publication EP3515632A1 from the applicant explains for instance how the thermal unit may assist the joining process. In other embodiments, the thermal unit or thermal device 38 may be a laser heating system, and induction heating system, an electric arc or similar equipment.

The joining apparatus 10 of Fig. 1 is adapted to perform a joining method according to the present invention. Fig. 1 shows the joining apparatus 10 in a first position, in which the punch, the retaining device and the clamping device are in a rest position or a pre-setting position. No joining element is arranged in the retaining device, the punch 16 is arranged above the retaining device 14 and the clamping device 18 does not contact the workpiece arrangement W. More particularly, the punch 16 leaves the entrance between a joining element feeding channel and the retaining device 14 free for the arrival of a joining element 24. The joining apparatus 10 is for instance moved above a joining area of the workpiece arrangement W by the robot, the joining axis X being aligned with the joining area.

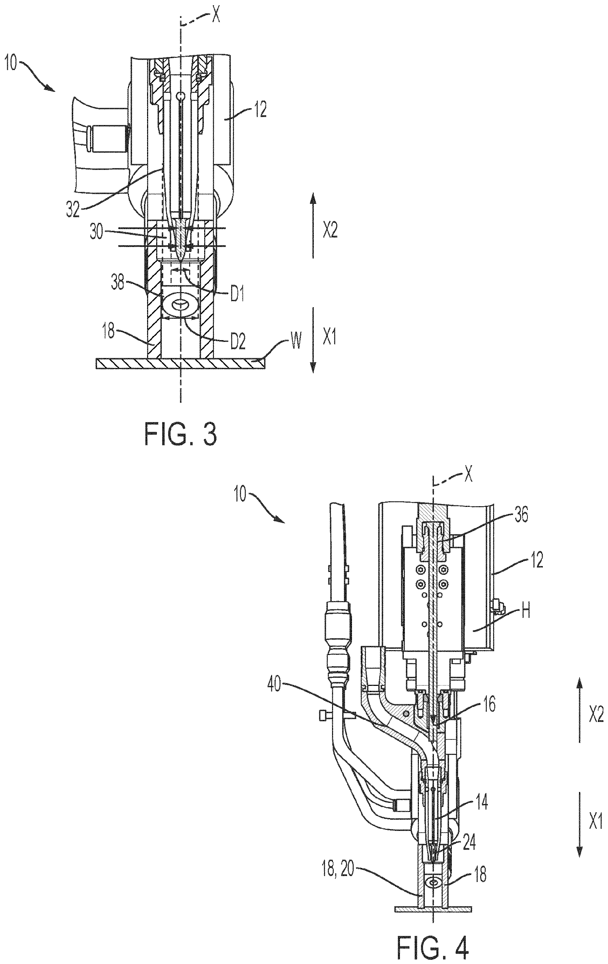

As visible in Fig. 2 in more details, to begin the joining process, one joining element 24 is arranged in the retaining device. The joining element 24 may be driven into the retaining device 14 by a feeding unit comprising a feeding channel 40. The clamping device 18 is moved toward the workpiece arrangement W until it contacts the upper surface of the workpiece arrangement W. If the joining process is thermally assisted by a thermal device or thermal unit 38, the thermal device 38 heats the workpiece arrangement W, as schematically visible in Fig. 2. As visible in Fig. 2 and Fig. 3, the shaft of the joining element 24 extends in the first portion 30, wherein the head is arranged in the retaining device facing the punch 16.

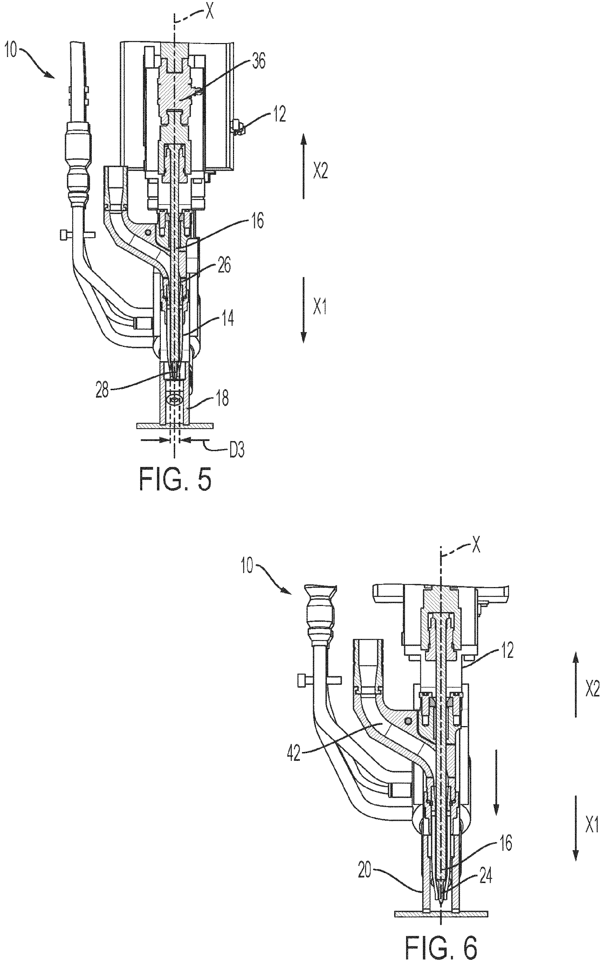

Once the joining element 24 is in position in the retaining device and/or the workpiece arrangement has been thermally pre-treated by the thermal (as depicted in Fig. 2 and Fig. 3), the drive unit 36 directly controls in translation the punch 16. The punch 16 is moved by the drive unit 36 in a first direction corresponding to the joining direction X1, toward the workpiece arrangement W, as represented by the arrow in Fig. 4. The punch 16 is moved by the drive unit 36 in the first direction X1 until it penetrates the retaining device 14. Notably the punch 16 first penetrates the second portion 32 and then continue its translation further along the joining axis X until it reaches the head of the joining element 24, as visible in Fig. 5 for instance.

Once it contacts the joining element 24, the punch 16 pushes the joining element 24 (and therefore with said joining element 24 the retaining device 14) toward the workpiece arrangement W, as for instance depicted in Fig. 6. The punch 16 drives the retaining device 14 until the retaining device 14 is stopped by a mechanical stop 42 arranged for instance on the housing H. The position of the mechanical stop 42 may be adjustable, so it can be adapted to the length of the joining element 24, for instance.

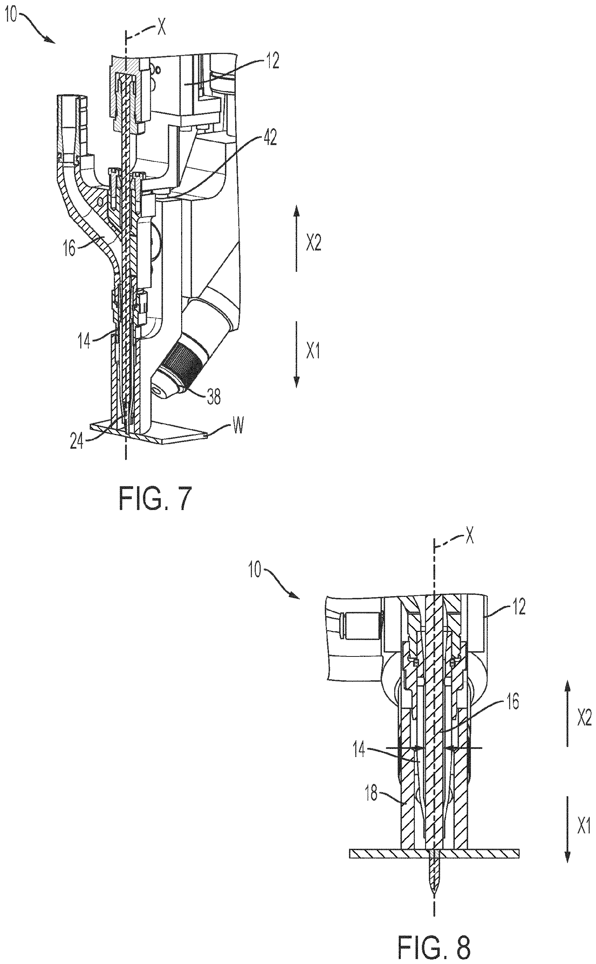

Once the retaining device 14 has reached the mechanical stop 42, its translation is stopped and it does not follow the motion of the drive anymore. More particularly, the punch 16 may be further moved in translation and it moves along the first portion 30 until the joining element is projected outside of the retaining device and reaches the workpiece arrangement W (see for instance fig. 7). The end of the punch 16 may move beyond the outlet orifice 28 of the retaining device 14 (see Fig. 8) for entirely setting the joining element 24 within the workpiece arrangement W.

The punch can then further be moved in translation such that it penetrates the first portion 30 of the retaining device 14. The punch outer dimension D3 is greater than the holding inner dimension D1. Therefore, the punch, when penetrating the first portion 30 elastically deforms the first portion 30 (or part of it), as visible in Fig. 8. The first portion 30 applies then a counterforce, notably a radial counterforce on the punch 16 and thus the retaining device 14 is coupled to the punch 16.

As visible in Fig. 8, in the setting position, the free end of the punch 16 protrudes from the outlet orifice 28 and has pushed the joining element 24 entirely in the workpiece arrangement W, the head of the joining element 24 is sitting flush on an upper side of the workpiece arrangement W, the shaft of the joining element having pierced layers of the workpiece arrangement W.

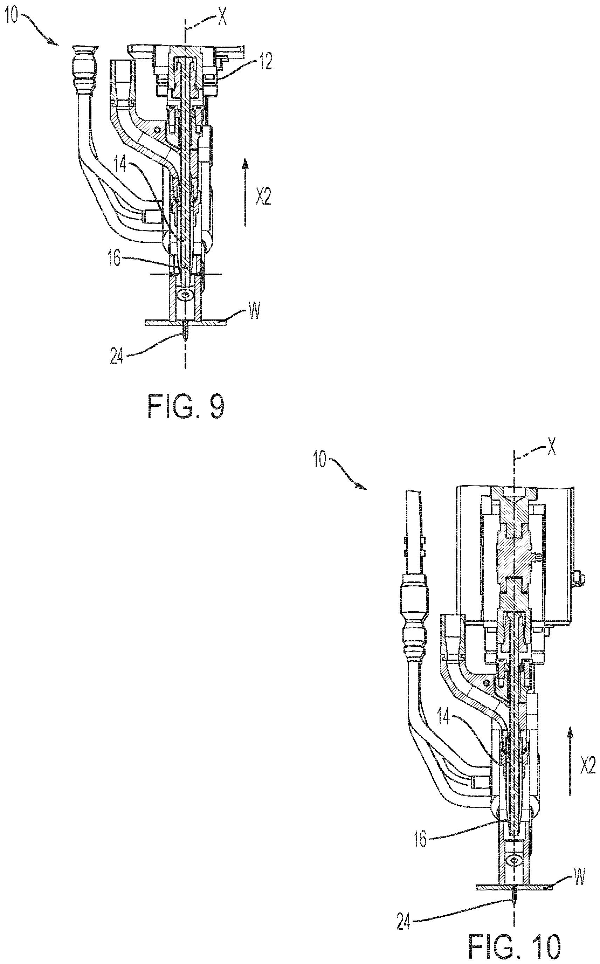

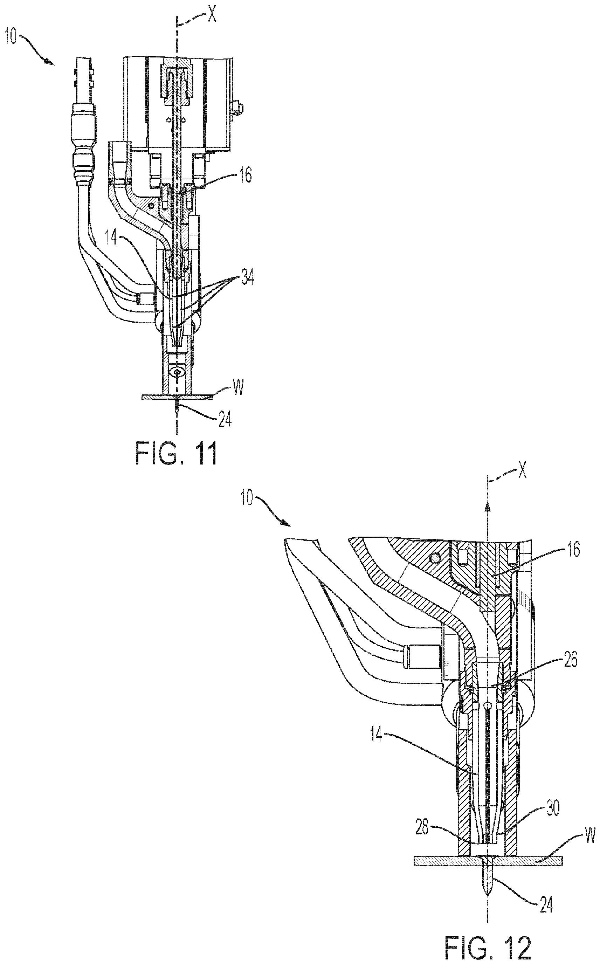

Once the joining element 24 is set within the workpiece arrangement W, the punch 16 is retracted, as visible in Fig. 9. More particularly the drive unit 36 moves the punch 16 in the second direction X2 along the joining axis. The second direction X2 is opposite the first direction X1. The second direction X2 corresponds to a retracting position. During the retraction of the punch 16, said punch 16 may drive the retaining device 14 back in its rest position. As depicted in fig. 10, the punch 16 drives back the retaining device 14 (due to the effort applied by the first portion of the retaining device on the punch) up to its rest position (which correspond to the position of the retaining device prior its use for setting the joining element). The stroke of the retaining device 14 is for instance stopped by a mechanical abutment 42, wherein the punch 16 continues its motion in the second direction X2. Thus, the punch 16 disengages the first portion 30 of the retaining device 14, as visible in Fig. 11 and can go back to its own rest position. The clamping device 16 for instance will at some point also be driven in the second direction X2 to release the workpiece arrangement, with its own drive unit or with the punch drive unit.

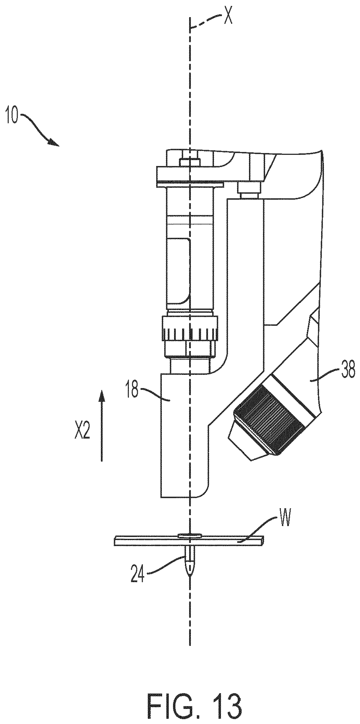

Alternatively, as depicted in Fig. 12 and 13, once the joining element 24 has been set, the punch 16 may be driven in the second direction X2 by the drive unit 36 without driving the retaining device 14. The retaining device 14 thus remains in its lower position wherein the punch is driven back to its pre-setting or rest position by the drive unit 36. The punch 16 will then reach its rest position and the retaining device 14 may be driven to its own rest position for instance by the clamping device 18. For instance, a mechanical coupling of the clamping device 18 and the retaining device 14 may occur during the retraction (the motion in the second direction) of the clamping device 18 from the workpiece arrangement W. The clamping device 18 during its motion in the second direction X2 may contact or abut with the retaining device 14 in its setting position or in any position along the joining axis between its rest position and its setting position and drives said retaining device 14 back in its rest position, as depicted in Fig. 13.
joining apparatus 10
workpiece arrangement W
joining head 12
housing H
retaining device 14
punch 16
clamping device 18
joining axis X
joining direction X1
clamp 20
joining element 24
inlet orifice 26
outlet orifice 28
first portion 30
second portion 32
resilient holding fingers 34
holding inner dimension D1
guiding inner dimension D2
drive unit 36
punch outer dimension D3
thermal unit 38
feeding channel 40
mechanical stop 42
second direction X2

## Claims

1. Joining method for joining a workpiece arrangement comprising the following steps of:
- providing a workpiece arrangement (W),
- providing a joining apparatus (10) comprising a joining head (12) having:
- a retaining device (14) for a joining element (24) and by means of which the joining element can be guided along or arranged on a joining axis,
- a punch (16) with which a setting movement of the joining element can be executed, the punch being movable along the joining axis (X) by a drive unit (36),
the joining apparatus (10) being in a pre-setting position, with the retaining device (14) being arranged at a non-zero distance above the workpiece arrangement (W), the retaining device (14) holding a joining element (24), and the punch being at a non-zero distance from the joining element,
- moving the punch (16) up to the joining element (24),
- setting the joining element in the workpiece arrangement,
**characterized in that** the punch (16) drives in translation the retaining device (14).

2. Method according to claim 1, wherein the punch (16) drives in translation the retaining device (14) in a first direction (X1) and in a second direction (X2), opposite the first direction (X1).

3. Method according to claim 1, wherein the joining apparatus (10) comprises a clamping device (18), and wherein the punch (16) drives in translation the retaining device (14) in a first direction (X1), and the clamping device (18) drives in translation the retaining device (14) in a second direction (X2), opposite the first direction (X1).

4. Method according to any of claims 1 to 3, wherein the retaining device (14) is a duct having an inlet orifice (26) and an outlet orifice (28) and comprises:
- a second portion (32), and
- a first portion (30), and
the retaining device (14) applying a holding force on the punch (16) when the punch is inserted into the first portion (30).

5. Method according to any of claims 1 to 5, wherein the joining element (24) is a fastening pin.

6. Method according to any of claims 1 to 6, wherein the joining apparatus (10) comprises a thermal unit (38) adapted to thermally pre-treat the workpiece arrangement locally, and wherein the thermal treatment is realized before moving the punch (16) up to the joining element.

7. Method according to any of claims 1 to 6, wherein the punch (16) drives in translation the retaining device (14) after having contacted the joining element (24).

8. Method according to any of claims 1 to 7, wherein the punch (16) drives first in translation the joining element and then drives in translation the joining element and the retaining device.

9. Method according to any of claims 1 to 8, wherein the retaining device (14) is driven in translation by the punch (16) until said retaining device reaches a mechanical stop (42).

10. Method according to claim 9, wherein the mechanical stop (42) is arranged at a freely adjustable predetermined position.

11. Method according to any of claims 9 to 10, wherein once the retaining device (24) reaches the mechanical stop (42), the punch (16) further drives in translation the joining element (24).

12. Joining apparatus (10) for joining workpieces, in particular according to the joining method of any of claims 1 to 11, said joining apparatus comprising a joining head (12) having:
- a retaining device (14) for a joining element and by means of which the joining element (24) can be guided along or arranged on a joining axis (X),
- a punch (16) with which a setting movement of the joining element (24) can be executed, the punch being movable along the joining axis by a drive unit (36), **characterized in that** the retaining device (14) is moved along the joining axis by the punch (16) and/or the clamping device (18).

13. Joining apparatus (10) according to claim 12, wherein the retaining device is a duct having an inlet orifice and an outlet orifice and comprises:
- a second portion (32), and
- a first portion (30),
wherein the second portion extends between the inlet and the first portion, and the first portion extends between the first portion and the outlet,
wherein the first portion is at least in part a resilient portion adapted to apply a radial holding force.

14. Joining apparatus (10) according to claim 13, wherein the first portion comprises a holding inner dimension, the second portion comprises a guiding inner dimension, the holding inner dimension being smaller than the guiding dimension, and wherein the outer dimension of the punch is smaller than the guiding inner dimension and greater than the holding inner dimension.

15. Joining apparatus (10) according to any of claims 12 to 14, wherein the retaining device comprises a retaining inner dimension which is smaller than the outer dimension of the punch.

16. Joining apparatus (10) according to any of claims 12 to 15, further comprising a clamping device (18), and wherein the clamping device (18) comprises a mechanical stop adapted to contact the retaining device (14) and such that the clamping device (18) is adapted to drive in translation the retaining device (14) in a second direction after the setting of a joining element (24) in a workpiece arrangement.

17. Joining apparatus (10) according to any of claims 12 to 16, further comprising a thermal unit (38), preferably a plasma torch.
